# EUROPÄISCHE PATENTSCHRIFT

(11) **EP 3 972 798 B1**
(45) Veröffentlichungstag und Bekanntmachung des Hinweises auf die Patenterteilung: **03.01.2024**
(21) Anmeldenummer: 20713633.4
(22) Anmeldetag: 24.03.2020
(51) Int. Cl.: B29C 43/34, B29D 30/00, B29C 43/46, B32B 25/04, B32B 3/08, B32B 7/05, B32B 7/12, B29C 43/18, B29C 43/28, B29C 43/52, B29K 21/00, B29K 105/20, B29L 17/00, B29L 31/34, B32B 3/04, B32B 37/22

(54) **VERFAHREN UND VORRICHTUNG ZUR HERSTELLUNG EINES GUMMIBAUTEILES**
METHOD AND DEVICE FOR PRODUCING A RUBBER COMPONENT
PROCÉDÉ ET DISPOSITIF POUR FABRIQUER UNE PIÈCE EN CAOUTCHOUC

(30) Priorität: 21.05.2019 DE 102019207402
(43) Veröffentlichungstag der Anmeldung: 30.03.2022
(73) Patentinhaber: Continental Reifen Deutschland GmbH, 30165 Hannover (DE)
(72) Erfinder: LUDWIG, Jens, 30419 Hannover (DE)
(74) Vertreter: Continental Corporation
(86) Internationale Anmeldenummer: PCT/EP2020/058091
(87) Internationale Veröffentlichungsnummer: WO 2020/233869

(56) Entgegenhaltungen:
- CN-A- 106 570 555
- DE-A1-102016 215 996
- JP-A- 2009 208 370
- US-A1- 2010 078 487
- US-A1- 2010 212 791
- US-A1- 2011 284 155
- US-B1- 6 688 353
- US-B2- 9 543 560

## Beschreibung

Die Erfindung betrifft ein Verfahren zum Herstellen eines Gummibauteiles, bei welchem mindestens eine elektronische Baugruppe zwischen einer unteren und einer oberen Lage eines Gummimaterials eingebettet wird. Ferner betrifft die Erfindung auch eine entsprechende Vorrichtung zur Herstellung derartiger Gummibauteile.

In jüngerer Zeit sind vermehrt Gummibauteile der eingangs genannten Art auf den Markt gekommen, die beispielsweise an Fahrzeugreifen angebracht oder in den aus mehreren Komponenten aufgebauten Reifen eingebracht werden, um Daten auslesbar zu speichern, etwa zum Zwecke der erleichterten Materiallogistik, als Originalitätsnachweis oder auch zum Zwecke des Abspeicherns von Verschleißparametern oder Eigenschaften des solchermaßen ausgerüsteten Reifens.

Durch die Einbettung der elektronischen Baugruppe zwischen einer unteren und einer oberen Lage eines Gummimaterials wird nicht nur eine vorteilhafte Robustheit gegenüber Stößen und anderen Erschütterungen erzielt, sondern auch eine problemlose Anbringung bzw. Integration an bzw. im Reifen. Gummibauteile der genannten Art sind jedoch nicht auf die Anwendung an oder in Reifen beschränkt, sondern können auch an anderen Gegenständen zum Einsatz kommen.

Die verwendeten elektronischen Baugruppen sind üblicherweise als passive Radiofrequenztransponder ausgeführt und kommen ohne eigene Stromversorgung aus, sodass sie besonders kompakt und langlebig sind. Sie werden üblicherweise als RFID-Chips bezeichnet.

In der US 2010/078487 A1 wird ein Verfahren zum Herstellen eines Gummibauteiles offenbart. Ferner wird in der US 2011/284155 A1 eine Methode zur Herstellung mindestens einer gummibeschichteten elektronischen Komponente offenbart.

Aus dem Stand der Technik ist ein Verfahren und eine Anlage zur Herstellung derartiger Gummibauteile bekannt, bei denen die mindestens eine elektronische Baugruppe gemeinsam mit den mit gleicher Geschwindigkeit zugeführten unteren und oberen Lagen des Gummimaterials durch einen Walzenspalt geführt wird, wodurch die untere und obere Lage des Gummimaterials in einem Laminiervorgang unter Zwischenlage der mindestens einen elektronischen Baugruppe miteinander verbunden werden. Ein solches kontinuierliches Verfahren zeichnet sich durch hohe Ausstoßleistung aus, die jedoch zum wirtschaftlichen Betrieb auch entsprechend hohe Abnahmekapazitäten fordert und im Hinblick auf eine schwankende on-demand Herstellung derartiger Gummibauteile nachteilig ist.

Aufgabe der vorliegenden Erfindung ist es, ein Verfahren und eine Vorrichtung der eingangs genannten Art vorzuschlagen, die eine einfache und flexible Herstellung der Gummibauteile auch bei wechselndem Bedarf mit geringem Aufwand ermöglicht.

Zur Lösung der gestellten Aufgabe wird erfindungsgemäß ein Verfahren gemäß den Merkmalen des Patentanspruches 1 vorgeschlagen.

Eine Vorrichtung zur Lösung der gestellten Aufgabe ist Gegenstand des Patentanspruchs 8.

Vorteilhafte Ausgestaltungen und Weiterbildungen der Erfindung sind Gegenstand der abhängigen Ansprüche.

Das erfindungsgemäße Verfahren zum Herstellen des Gummibauteiles sieht die Abfolge der nachstehenden Schritte vor:
a) Bereitstellen eines Längenabschnittes der unteren Lage des Gummimaterials, welcher auf der Oberseite mit mindestens einer elektronischen Baugruppe versehen ist;
b) ortsfestes Positionieren des Längenabschnittes der unteren Lage;
c) Abrollen eines Längenabschnittes der oberen Lage des Gummimaterials auf der Oberseite des ortsfesten Längenabschnittes der unteren Lage in einer Abrollrichtung und haftfestes Verbinden der Längenabschnitte der Lagen des Gummimaterials unter Einbettung der mindestens einen elektronischen Baugruppe;
d) Ausfördern des Längenabschnittes des Gummibauteiles.

Durch diese Abfolge werden die Einzelkomponenten des Gummibauteiles, nämlich untere und obere Lage des Gummimaterials sowie die mindestens eine elektronische Baugruppe nicht kontinuierlich zu dem Gummibauteil verbunden, sondern die obere Lage wird auf der unteren, ortsfest ruhenden Lage, auf der sich das mindestens eine elektronische Bauteil bereits befindet, vorzugsweise taktweise durch Abrollen aufgebracht, wobei die Abrollbewegung entgegen der eigentlichen Förder- bzw. Produktionsrichtung erfolgt.

Anschließend wird der erzeugte Verbund, d. h. das fertige Gummibauteil, abschnittsweise ausgefördert, wobei dieses Ausfördern nach einem Vorschlag der Erfindung vorzugsweise in einer der Abrollrichtung entgegengesetzten Richtung, d. h. in Förder- bzw. Produktionsrichtung erfolgt.

Die Ausrüstung des Längenabschnittes der unteren Lage mit mindestens einer auf der Oberseite positionierten und vorzugsweise auch fixierten elektronischen Baugruppe kann wahlweise unmittelbar vor dem Aufbringen der oberen Lage oder bereits in einer vorausgegangenen Bearbeitungsstufe erfolgen.

Um eine taktweise sich wiederholende Produktion zu ermöglichen, wird nach einem Vorschlag der Erfindung beim Ausfördern des Längenabschnittes des Gummibauteiles ein nachfolgender Längenabschnitt der unteren Lage gemäß Schritt a) bereitgestellt und anschließend werden die Schritte b) bis d) mindestens einfach bis dauerhaft wiederholt.

In an sich bekannter Weise kann das Gummibauteil mehrere voneinander beabstandete, insbesondere regelmäßig voneinander beabstandete elektronische Baugruppen umfassen, sodass nach dem Ausfördern des Gummibauteiles über eine geeignete Vereinzelungseinrichtung, zum Beispiel eine Quertrenneinrichtung das Gummibauteil jeweils zwischen benachbarten elektronischen Baugruppen quer zu seiner in Produktionsrichtung verlaufenden Längserstreckung durchtrennt wird, sodass Einzelbauteile aus dem Gummibauteil erhalten werden, die jeweils eine einzelne elektronische Baugruppe zwischen der unteren und oberen Lage eingebettet umfassen.

Die im Rahmen des erfindungsgemäßen Verfahrens zwischen der unteren und oberen Lage eingebetteten elektronischen Baugruppen unterliegen keiner generellen Beschränkung, sind jedoch nach einem Vorschlag der Erfindung bevorzugt als RFID-Chip ausgeführt.

Die untere und obere Lage des Gummimaterials werden beim Abrollen der oberen Lage auf der die mindestens eine elektronische Baugruppe tragenden Oberseite der unteren Lage in einem Laminierprozess unter Einwirkung von Druck und/oder Wärme haftfest miteinander verbunden, beispielsweise durch Einsatz entsprechender Andruckwalzen, die gegebenenfalls auch temperiert sein können. Ferner können auch Strahlungsheizer vorgesehen sein, um insbesondere die obere Lage vor dem Abrollen auf eine für den Laminierprozess vorteilhafte Temperatur zu erwärmen.

Die nach dem erfindungsgemäßen Verfahren hergestellten Gummibauteile oder die daraus vereinzelten Einzelbauteile sind nach einem Vorschlag der Erfindung dazu bestimmt, an einem Reifen angebracht, d. h. mit diesem verbunden zu werden. Auch können die Gummibauteile oder die daraus vereinzelten Einzelbauteile bereits während des Herstellungsprozesses eines solchen Reifens vor dem Vulkanisieren desselben zwischen einzelne Lagen der für den Reifenaufbau verwendeten Gummilagen eingebracht werden, sodass sie nach dem Vulkanisieren unverlierbar innerhalb der Reifenstruktur integriert sind.

Die im Rahmen der Erfindung vorgeschlagene Vorrichtung zum Herstellen eines solchen Gummibauteiles, welches mindestens eine zwischen einer unteren und einer oberen Lage eines Gummimaterials eingebettete elektronische Baugruppe aufweist, umfasst Einrichtungen für die Zuführung und anschließende ortsfeste Positionierung eines Längenabschnittes der unteren Lage, welcher mindestens eine elektronische Baugruppe auf der Oberseite trägt, eine Abrollvorrichtung zum Abrollen und haftfesten Verbinden eines Längenabschnittes der oberen Lage des Gummimaterials auf der Oberseite des ortsfest positionierten Längenabschnittes der unteren Lage in einer Abrollrichtung und Mittel zum Ausfördern des hergestellten Längenabschnittes des Gummibauteiles.

Gemäß der Erfindung sind die Mittel zum Ausfördern des hergestellten Gummibauteiles derart eingerichtet, dass das Ausfördern des Gummibauteils in einer entgegengesetzt zur Abrollrichtung verlaufenden Richtung bewirkbar ist. Insbesondere können die Einrichtungen für die Zuführung des Längenabschnittes der unteren Lage diesen nach dem Verbinden mit der oberen Lage taktweise weiterfördern und auf diese Weise aus der Vorrichtung herausfördern.

Die Einrichtungen für die Zuführung des Längenabschnittes der unteren Lage können im einfachsten Fall in Form von Trag- bzw. Führungsrollen gebildet sein. In anderen Ausführungsformen kann es sich auch um eine passiv oder aktiv betriebene Vorrichtung bis hin zu einem taktweise betriebenen Bandförderer handeln, auf dem der Längenabschnitt der unteren Lage aufliegend zu- und abgeführt wird.

Unter einem ortsfesten Positionieren des Längenabschnittes der unteren Lage wird im Rahmen der Erfindung eine Unterbrechung des Vorschubs bzw. der Förderung der unteren Lage in Zuführrichtung verstanden. Während dieser ortsfesten Positionierung des Längenabschnittes der unteren Lage verharrt dieser unbewegt, während der Längenabschnitt der oberen Lage auf diesem vorübergehend ruhenden, ortsfest positionierten unteren Längenabschnitt abgerollt wird. Im Anschluss an den Abrollvorgang wird die ortsfeste Positionierung wieder aufgehoben, um den aus den Längenabschnitten der unteren und oberen Lage erzeugten Längenabschnitt des Gummibauteiles auszufördern und ggf. einen nachfolgenden Längenabschnitt der unteren Lage bereitzustellen und den Vorgang aufs Neue beginnen zu lassen,

Nach einem weiteren Vorschlag der Erfindung ist eine Vereinzelungseinrichtung zum Durchtrennen des Gummibauteils zwischen benachbarten elektronischen Baugruppen unter Ausbildung von Einzelbauteilen mit einer elektronischen Baugruppe vorgesehen, die im Anschluss an die Herstellung des Gummibauteils mit mehreren eingebetteten elektronischen Baugruppen, insbesondere in regelmäßigen Abständen eingebetteten elektronischen Baugruppen zum Einsatz kommt.

Nach einem Vorschlag der Erfindung wird die mindestens eine elektronische Baugruppe von einem RFID-Chip gebildet, jedoch können auch beliebige andere elektronische Baugruppen, beispielsweise Sensoren und dergleichen mehr zum Einsatz kommen und mit der erfindungsgemäßen Vorrichtung sowie dem Verfahren zwischen einer unteren und einer oberen Lage eines Gummimaterials eingebettet werden.

Nach einem Vorschlag der Erfindung ist das Gummibauteil oder das daraus vereinzelte Einzelbauteil dazu bestimmt, in einen Reifen eingebracht oder mit diesem verbunden zu werden.

Die Abrollvorrichtung kann ferner mit den Einrichtungen zur Zuführung des Längenabschnittes der unteren Lage und/oder dem durch das Verbinden der Längenabschnitte der unteren und oberen Lage 10, 11 erstellten Längenabschnitt des Gummibauteiles 1 koppelbar ausgeführt sein, sodass sie in gekoppeltem Zustand gemeinsam entgegen der Abrollrichtung zum Ausfördern des Gummibauteils und zum Zuführen eines nachfolgenden Längenabschnittes der unteren Lage bewegbar sind.

Weitere Ausgestaltungen und Einzelheiten der Erfindung werden nachfolgend anhand der ein Ausführungsbeispiel darstellenden schematischen und stark vereinfachten Zeichnung dargestellt. Es zeigen:
- Figur 1: eine nach dem erfindungsgemäßen Verfahren arbeitende erfindungsgemäße Vorrichtung in einem Ausgangszustand;
- Figur 2: die Vorrichtung gemäß Figur 1 während des Abrollens der oberen Lage;
- Figur 3: die Vorrichtung gemäß Figur 1 während des Ausförderns des Gummibauteils.

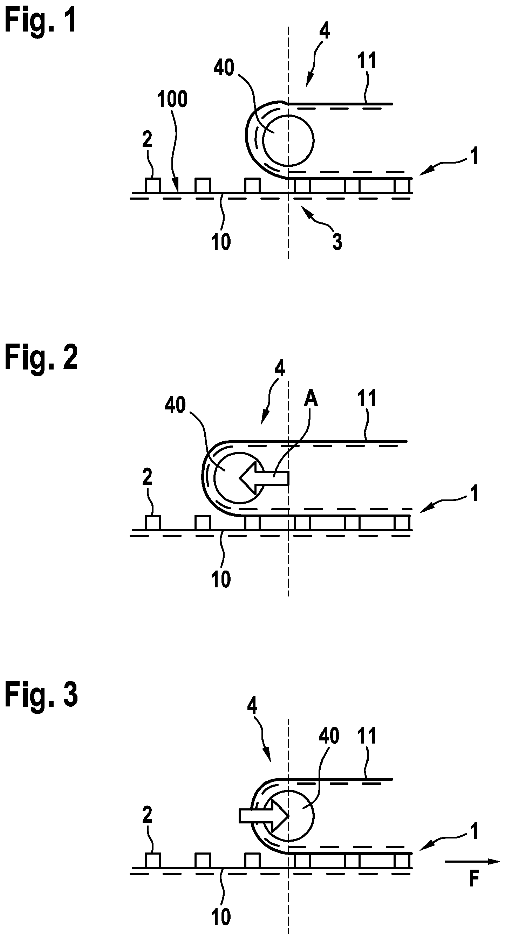

Aus den Figuren 1 bis 3 ist in stark vereinfachter Form eine Vorrichtung ersichtlich, die zur Herstellung eines Gummibauteils 1 dient, welches beispielsweise im Rahmen der Reifenherstellung zur Anwendung kommt.

Das Gummibauteil 1 umfasst mindestens eine elektronische Baugruppe 2, üblicherweise in Form eines RFID-Chips 2, die zwischen zwei im Wesentlichen parallel aufeinanderliegenden Lagen, nämlich einer unteren Lage 10 und einer oberen Lage 11 eines Gummimaterials eingebettet ist.

Die untere und obere Lage 10, 11 sind vorzugsweise in Form von langgestreckten streifenförmigen Abschnitten vorkonfektioniert und bestehen aus einem geeigneten Gummimaterial, wobei im Hinblick auf die gewünschte Einbettung eines insbesondere als RFID-Chip mit Sende- und Empfangsfunktion ausgeführten elektronischen Bauteiles 2 Gummimaterialien mit möglichst geringer dielektrischer Konstante über die üblichen Frequenzbänder eines RFID-Chips als geeignet angesehen werden.

Zur Herstellung eines solchen Gummibauteils 1 wird von einer nicht dargestellten Vorratseinrichtung, beispielsweise einem Extruder oder einem Materialspeicher eine untere Lage 10 des Gummimaterials über mit Bezugszeichen 3 angedeutete Einrichtungen 3 zugeführt. Die Einrichtungen 3 zur Zuführung der unteren Lage 10 sind so ausgeführt, dass sie bedarfsgesteuert taktweise antreibbar sind, ansonsten aber ortsfest und unbeweglich verbleiben. Insofern kann die zugeführte untere Lage 10 bei Betrieb der Einrichtungen 3 mit einem voreinstellbaren Längenabschnitt bereitgestellt und durch anschließendes Außerbetriebsetzen der Einrichtungen 3 vorübergehend ortsfest positioniert werden.

Darüber hinaus umfasst die Vorrichtung ebenfalls nicht näher dargestellte Mittel zum Aufbringen der mindestens einen elektronischen Baugruppe 2 auf die Oberseite der zugeführten unteren Lage 10, sodass die untere Lage 10 bereits mit auf der Oberseite 100 in vorzugsweise regelmäßigen Abständen aufliegenden elektronischen Baugruppen 2 der Zuführvorrichtung 3 zugeführt und von dieser vorübergehend ortsfest positioniert wird.

Oberhalb des zugeführten und bereitgestellten Längenabschnittes der unteren Lage 10 befindet sich eine Abrollvorrichtung 4, die im dargestellten Ausführungsbeispiel gemäß Figur 1 eine Umlenkrolle 40 umfasst, über die die obere Lage 11 des Gummimaterials verläuft. Auch die obere Lage 11 kann dabei aus einem nicht dargestellten Extruder oder einer Vorratseinrichtung, beispielsweise einer entfernt positionierten Vorratsrolle zugeführt werden.

In der in der Figur 1 dargestellten Grundkonfiguration bzw. dem Ausgangszustand wird weder die untere Lage 10 mit den darauf positionierten elektronischen Baugruppen 2 noch die obere Lage 11 innerhalb der Abrollvorrichtung 4 bewegt.

Die Herstellung des Gummibauteils 1, welche die Einbettung der elektronischen Baugruppen 2 zwischen der unteren und oberen Lage 10,11 erfordert, wird dadurch bewirkt, dass gemäß Figur 2 die Abrollvorrichtung 4 in einer Abrollrichtung A um einen gewissen voreingestellten Längenbetrag, vorzugsweise die Länge des bereitgestellten und vorübergehend ortdfest positionierten Längenabschnittes der unteren Lage 10 verfahren wird, und zwar in der Darstellung gemäß Figur 2 nach links. Dabei wird ein entsprechender Längenabschnitt der oberen Lage 11 über dem weiterhin ortsfest gehalterten Längenabschnitt der unteren Lage 10 mit den darauf befindlichen elektronischen Baugruppen 2 abgerollt, sodass dieser abgerollte Längenabschnitt der oberen Lage 11 auf der Oberseite 100 des Längenabschnittes der unteren Lage 10 unter Einschluss der ebenfalls auf der Oberseite 100 befindlichen elektronischen Baugruppen 2 zum Liegen kommt. Infolge eines ausreichend hohen ausgeübten Druckes der gegebenenfalls auch temperierten Umlenkrolle 40 wird dabei durch den aufgebrachten Druck und/oder Wärme die obere Lage 11 mit der unteren Lage 10 unter Einschluss der elektronischen Baugruppen 2 durch Laminieren haftfest verbunden.

Anschließend wird gemäß Figur 3 die Abrollvorrichtung 4 mit den Einrichtungen 3 und/oder dem durch das Verbinden der Längenabschnitte der unteren und oberen Lage 10, 11 erstellten Längenabschnitt des Gummibauteiles 1 beispielsweise mechanisch gekoppelt und gemeinsam entgegen der Abrollrichtung A, d. h. entsprechend einer Förder- bzw. Produktionsrichtung F um den zuvor beim Abrollen durchlaufenden Längenabschnitt zurückverfahren, wodurch ein entsprechender Längenabschnitt des solchermaßen hergestellten Gummibauteiles 1 aus der Vorrichtung ausgefördert wird und zugleich ein nachfolgender Längenabschnitt der unteren Lage 10 mit darauf befindlichen elektronischen Baugruppen nachgeführt wird, sodass anschließend das Abrollen in entgegengesetzter Richtung A erneut erfolgen kann.

Wesentlich für das vorangehend erläuterte Verfahren und die Vorrichtung ist es, dass das Laminieren der oberen Lage 11 auf die untere Lage 10 mit den darauf befindlichen elektronischen Baugruppen 2 diskontinuierlich und bei ortsfest fixierter unterer Lage 10 mit der mindestens einen darauf befindlichen elektronischen Baugruppe 2 und taktweise erfolgt, da lediglich die obere Lage 11 mittels der Abrollvorrichtung 4 entgegen der Förder- bzw. Produktionsrichtung F in einer Abrollrichtung A auf die untere Lage 10 mit der mindestens einen elektronischen Baugruppe 2 abgerollt wird.

Die vorangehend erläuterte Verfahrbewegung der Abrollvorrichtung 4 in Pfeilrichtung A gemäß Figur 2 sowie die anschließende Rückführung gemäß Figur 3 kann beispielsweise auf einer Länge von jeweils wenigen Millimetern bis einigen Zentimetern erfolgen, beispielsweise um jeweils 10 mm. Auf diese Weise ist es möglich, mit jedem Vor- und Rückhub in und entgegen Pfeilrichtung A einen entsprechenden Längenabschnitt des Gummimaterials herzustellen und auszufördern, sodass je nach Taktzahl der Vorrichtung eine bedarfsweise on-demand Herstellung einzelner Gummibauteile bis hin zu einem quasi-kontinuierlichen Produktionsprozess darstellbar ist.

Es versteht sich, dass das taktweise ausgeförderte Gummibauteil 1 im Anschluss an die Herstellung in einer separaten Vereinzelungseinrichtung in Einzelbauteile vereinzelt werden kann, die insbesondere lediglich eine einzige elektronische Baugruppe 2 eingebettet zwischen der unteren und oberen Lage 10,11 umfassen. Dazu wird vorteilhaft das hergestellte Gummibauteil quer zur Produktionsrichtung F zwischen benachbarten elektronischen Baugruppen 2 durchtrennt.

Die erhaltenen Einzelbauteile mit jeweils einer eingebetteten elektronischen Baugruppe 2 können sodann einzeln an einem Fahrzeugreifen befestigt oder während dessen Herstellung in diesen integriert werden.

Der Fachmann wird jedoch erkennen, dass das erfindungsgemäße Verfahren und die Vorrichtung nicht auf die Herstellung von Gummibauteilen für den Einsatz an Reifen beschränkt ist, sondern die hergestellten Gummibauteile und deren Einzelbauteile auch für vielfältige andere Anwendungen verwendet werden können.

Es versteht sich, dass die verwendeten unteren und oberen Lagen 10,11 des Gummimaterials sowohl einschichtig als auch mehrschichtig ausgebildet sein können und überdies auch mit einer haftvermittelnden Schicht und dergleichen mehr zum Ausbilden einer guten Laminierverbindung versehen sein können.

### Bezugszeichenliste

- 1: Gummibauteil
- 2: elektronische Baugruppe
- 3: Einrichtungen zum Zuführen der unteren Lage
- 4: Abrollvorrichtung
- 10: untere Lage
- 11: obere Lage
- 40: Umlenkrolle
- 100: Oberseite

## Patentansprüche

1. Verfahren zum Herstellen eines Gummibauteiles (1), bei welchem mindestens eine elektronische Baugruppe (2) zwischen einer unteren und einer oberen Lage (10, 11) eines Gummimaterials eingebettet wird, umfassend die Schritte:
a) Bereitstellen eines Längenabschnittes der unteren Lage (10) des Gummimaterials, welcher auf der Oberseite (100) mit mindestens einer elektronischen Baugruppe (2) versehen ist;
b) ortsfestes Positionieren des Längenabschnittes der unteren Lage (10);
c) Abrollen eines Längenabschnittes der oberen Lage (11) des Gummimaterials auf der Oberseite (100) des ortsfesten Längenabschnittes der unteren Lage (10) in einer Abrollrichtung (A) und haftfestes Verbinden der Längenabschnitte der Lagen (10, 11) des Gummimaterials unter Einbettung der mindestens einen elektronischen Baugruppe (2);
d) Ausfördern des Längenabschnittes des Gummibauteiles (1).

2. Verfahren nach Anspruch 1, **dadurch gekennzeichnet, dass** das Ausfördern des Gummibauteiles (1) in einer zur Abrollrichtung (A) entgegengesetzten Richtung erfolgt.

3. Verfahren nach Anspruch 1 oder 2, **dadurch gekennzeichnet, dass** beim Ausfördern des Längenabschnittes des Gummibauteiles ein nachfolgender Längenabschnitt der unteren Lage (10) gemäß Schritt a) bereitgestellt und anschließend die Schritte b) bis d) wiederholt werden.

4. Verfahren nach einem der Ansprüche 1 bis 3, **dadurch gekennzeichnet, dass** das Gummibauteil (1) mehrere voneinander beabstandete elektronische Baugruppen (2) umfasst und nach dem Ausfördern in jeweils eine elektronische Baugruppe (2) umfassende Einzelbauteile vereinzelt wird.

5. Verfahren nach einem der Ansprüche 1 bis 4, **dadurch gekennzeichnet, dass** die mindestens eine elektronische Baugruppe (2) als RFID-Chip ausgebildet ist.

6. Verfahren nach einem der Ansprüche 1 bis 5, **dadurch gekennzeichnet, dass** die untere und obere Lage (10, 11) des Gummimaterials durch Laminieren unter Einwirkung von Druck und/oder Wärme haftfest miteinander verbunden werden.

7. Verfahren nach einem der Ansprüche 1 bis 6, **dadurch gekennzeichnet, dass** das Gummibauteil (1) oder das daraus vereinzelte Einzelbauteil dazu bestimmt ist, in einen Reifen eingebracht oder mit diesem verbunden zu werden.

8. Vorrichtung zum Herstellen eines Gummibauteiles (1), welches mindestens eine zwischen einer unteren und einer oberen Lage (10,11) eines Gummimaterials eingebettete elektronische Baugruppe (2) aufweist, aufweisend ein Gummibauteil (1), welches mindestens eine zwischen einer unteren und einer oberen Lage (10,11) eines Gummimaterials eingebettete elektronische Baugruppe (2) aufweist, und umfassend Einrichtungen (3) für die Zuführung und anschließende ortsfeste Positionierung eines Längenabschnitts der unteren Lage (10), der mindestens eine elektronische Baugruppe (2) auf der Oberseite trägt, eine Abrollvorrichtung (4) zum Abrollen und haftfesten Verbinden eines Längenabschnittes der oberen Lage (11) des Gummimaterials auf der Oberseite (100) des ortsfest positionierten Längenabschnittes der unteren Lage (10) in einer Abrollrichtung (A) und Mittel zum Ausfördern des hergestellten Längenabschnittes des Gummibauteiles, **dadurch gekennzeichnet, dass** das Ausfördern des Gummibauteils (1) in einer entgegengesetzt zur Abrollrichtung (A) verlaufenden Richtung bewirkbar ist.

9. Vorrichtung nach Anspruch 8, **dadurch gekennzeichnet, dass** eine Vereinzelungseinrichtung zum Durchtrennen des Gummibauteiles (1) zwischen benachbarten elektronischen Baugruppen (2) unter Ausbildung eines Einzelbauteiles mit einer elektronischen Baugruppe (2) vorgesehen ist.

10. Vorrichtung nach einem der Ansprüche 8 bis 9, **dadurch gekennzeichnet, dass** die mindestens eine elektronische Baugruppe (2) von einem RFID-Chip gebildet ist.

11. Vorrichtung nach einem der Ansprüche 8 bis 10, **dadurch gekennzeichnet, dass** das Gummibauteil (1) oder das daraus vereinzelte Einzelbauteil dazu bestimmt ist, in einen Reifen eingebracht oder mit diesem verbunden zu werden.

12. Vorrichtung nach einem der Ansprüche 8 bis 11, **dadurch gekennzeichnet, dass** die Abrollvorrichtung (4) mit den Einrichtungen (3) und/oder dem durch das Verbinden der Längenabschnitte der unteren und oberen Lage 10, 11 erstellten Längenabschnitt des Gummibauteiles 1 koppelbar ist und in gekoppeltem Zustand gemeinsam mit der Zuführvorrichtung (3) entgegen der Abrollrichtung (A) zum Ausfördern des Gummibauteiles (1) und zum Zuführen eines nachfolgenden Längenabschnittes der unteren Lage (10) bewegbar sind.

## Claims

1. Method for producing a rubber component (1), in the case of which at least one electronic assembly (2) is embedded between a lower and an upper ply (10, 11) of a rubber material, comprising the following steps:
a) providing a length portion of the lower ply (10) of the rubber material, which is equipped, on the top side (100), with at least one electronic assembly (2);
b) stationarily positioning the length portion of the lower ply (10);
c) unrolling a length portion of the upper ply (11) of the rubber material on the top side (100) of the stationary length portion of the lower ply (10) in an unrolling direction (A), and fixedly adhesively connecting the length portions of the plies (10, 11) of the rubber material so as to embed the at least one electronic assembly (2);
d) conveying out the length portion of the rubber component (1).

2. Method according to Claim 1, **characterized in that** the rubber component (1) is conveyed out in a direction opposite to the unrolling direction (A).

3. Method according to Claim 1 or 2, **characterized in that**, as the length portion of the rubber component is conveyed out, a subsequent length portion of the lower ply (10) is provided in accordance with step a), and steps b) to d) are subsequently repeated.

4. Method according to any one of Claims 1 to 3, **characterized in that** the rubber component (1) comprises multiple mutually spaced-apart electronic assemblies (2) and, after being conveyed out, is separated into individual components that each comprise one electronic assembly (2).

5. Method according to any one of Claims 1 to 4, **characterized in that** the at least one electronic assembly (2) is in the form of an RFID chip.

6. Method according to any one of Claims 1 to 5, **characterized in that** the lower and upper plies (10, 11) of the rubber material are fixedly adhesively connected to one another by lamination under the action of pressure and/or heat.

7. Method according to any one of Claims 1 to 6, **characterized in that** the rubber component (1) or the individual component separated out therefrom is intended for being incorporated into or connected to a tyre.

8. Device for producing a rubber component (1) which has at least one electronic assembly (2) embedded between a lower and an upper ply (10, 11) of a rubber material, comprising a rubber component (1), which has at least one electronic assembly (2) embedded between a lower and an upper ply (10, 11) of a rubber material, and comprising equipment (3) for feeding and subsequently stationarily positioning a length portion of the lower ply (10) which bears at least one electronic assembly (2) on the top side, an unrolling device (4) for unrolling and fixedly adhesively connecting a length portion of the upper ply (11) of the rubber material on the top side (100) of the stationarily positioned length portion of the lower ply (10) in an unrolling direction (A), and means for conveying out the produced length portion of the rubber component, **characterized in that** the rubber component (1) can be caused to be conveyed out in a direction extending oppositely to the unrolling direction (A).

9. Device according to Claim 8, **characterized in that** an item of separating equipment is provided for severing the rubber component (1) between adjacent electronic assemblies (2) so as to form an individual component with one electronic assembly (2).

10. Device according to either one of Claims 8 and 9, **characterized in that** the at least one electronic assembly (2) is formed by an RFID chip.

11. Device according to any one of Claims 8 to 10, **characterized in that** the rubber component (1) or the individual component separated out therefrom is intended for being incorporated into or connected to a tyre.

12. Device according to any one of Claims 8 to 11, **characterized in that** the unrolling device (4) is couplable to the equipment (3) and/or to the length portion of the rubber component 1 created as a result of the connection of the length portions of the lower and upper plies 10, 11, and in the coupled state is movable together with the feed device (3) counter to the unrolling direction (A) for the purpose of conveying out the rubber component (1) and for the purpose of feeding a subsequent length portion of the lower ply (10).

## Revendications

1. Procédé de fabrication d'un composant en caoutchouc (1), dans lequel au moins un sous-ensemble électronique (2) est inséré entre une couche inférieure et une couche supérieure (10, 11) d'un matériau en caoutchouc, comprenant les étapes suivantes :
a) la fourniture d'une section longitudinale de la couche inférieure (10) du matériau en caoutchouc, dont le côté supérieur (100) est pourvu d'au moins un sous-ensemble électronique (2) ;
b) le positionnement fixe de la section longitudinale de la couche inférieure (10) ;
c) le déroulement d'une section longitudinale de la couche supérieure (11) du matériau en caoutchouc sur le côté supérieur (100) de la section longitudinale fixe de la couche inférieure (10) dans une direction de déroulement (A) et la liaison adhésive des sections longitudinales des couches (10, 11) du matériau en caoutchouc avec insertion de l'au moins un sous-ensemble électronique (2) ;
d) l'extraction de la section longitudinale du composant en caoutchouc (1).

2. Procédé selon la revendication 1, **caractérisé en ce que** l'extraction du composant en caoutchouc (1) s'effectue dans une direction opposée à la direction de déroulement (A).

3. Procédé selon la revendication 1 ou 2, **caractérisé en ce que**, lors de l'extraction de la section longitudinale du composant en caoutchouc, une section longitudinale suivante de la couche inférieure (10) est fournie conformément à l'étape a) et les étapes b) à d) sont ensuite répétées.

4. Procédé selon l'une quelconque des revendications 1 à 3, **caractérisé en ce que** le composant en caoutchouc (1) comprend plusieurs sous-ensembles électroniques (2) espacés les uns des autres et est séparé, après l'extraction, en composants individuels comprenant chacun un sous-ensemble électronique (2).

5. Procédé selon l'une quelconque des revendications 1 à 4, **caractérisé en ce que** l'au moins un sous-ensemble électronique (2) est configuré sous forme de puce RFID.

6. Procédé selon l'une quelconque des revendications 1 à 5, **caractérisé en ce que** les couches inférieure et supérieure (10, 11) du matériau en caoutchouc sont reliées entre elles de manière adhésive par stratification sous l'effet de pression et/ou de chaleur.

7. Procédé selon l'une quelconque des revendications 1 à 6, **caractérisé en ce que** le composant en caoutchouc (1) ou le composant individuel séparé à partir de celui-ci est destiné à être introduit dans un pneu ou à être relié à celui-ci.

8. Dispositif pour la fabrication d'un composant en caoutchouc (1), qui présente au moins un sous-ensemble électronique (2) inséré entre une couche inférieure et une couche supérieure (10, 11) d'un matériau en caoutchouc, présentant un composant en caoutchouc (1), qui présente au moins un sous-ensemble électronique (2) inséré entre une couche inférieure et une couche supérieure (10, 11) d'un matériau en caoutchouc, et comprenant des appareils (3) pour l'amenée et le positionnement fixe ultérieur d'une section longitudinale de la couche inférieure (10), qui porte au moins un sous-ensemble électronique (2) sur le côté supérieur, un dispositif de déroulement (4) pour le déroulement et la liaison adhésive d'une section longitudinale de la couche supérieure (11) du matériau en caoutchouc sur le côté supérieur (100) de la section longitudinale de la couche inférieure (10) positionnée de manière fixe dans une direction de déroulement (A) et des moyens d'extraction de la section longitudinale fabriquée du composant en caoutchouc, **caractérisé en ce que** l'extraction du composant en caoutchouc (1) peut être réalisée dans une direction opposée à la direction de déroulement (A).

9. Dispositif selon la revendication 8, **caractérisé en ce qu'**il est prévu un appareil de séparation pour sectionner le composant en caoutchouc (1) entre des sous-ensembles électroniques (2) voisins en formant un composant individuel avec un sous-ensemble électronique (2).

10. Dispositif selon l'une quelconque des revendications 8 à 9, **caractérisé en ce que** l'au moins un sous-ensemble électronique (2) est formé par une puce RFID.

11. Dispositif selon l'une quelconque des revendications 8 à 10, **caractérisé en ce que** le composant en caoutchouc (1) ou le composant individuel séparé à partir de celui-ci est destiné à être introduit dans un pneu ou à être relié à celui-ci.

12. Dispositif selon l'une quelconque des revendications 8 à 11, **caractérisé en ce que** le dispositif de déroulement (4) peut être couplé aux appareils (3) et/ou à la section longitudinale du composant en caoutchouc 1 obtenue par la liaison des sections longitudinales des couches inférieure et supérieure 10, 11 et, à l'état couplé, ils peuvent être déplacés conjointement avec le dispositif d'amenée (3) à l'encontre de la direction de déroulement (A) pour l'extraction du composant en caoutchouc (1) et pour l'amenée d'une section longitudinale suivante de la couche inférieure (10).
